# EUROPEAN PATENT APPLICATION

(11) **EP 4 528 513 A1**
(43) Date of publication of application: **26.03.2025**
(21) Application number: 23199568.9
(22) Date of filing: 25.09.2023
(51) Int. Cl.: G06F 11/07, G06F 11/34

(54) **METHOD FOR IMPROVING THE PERFORMANCE OF A DATA-DRIVEN MODEL**

(71) Applicant: ABB SCHWEIZ AG, 5400 Baden (CH)
(72) Inventor: MANCA, Gianluca, 80935 München (DE); DIX, Marcel, 78476 Allensbach (DE); KLOEPPER, Benjamin, 68199 Mannheim (DE); BORRISON, Reuben, 68782 Brühl (DE); SHARMA, Divyasheel, 560048 Bangalore (IN); K R, Chandrika, 560078 Bangalore (IN); MADUSKAR, Deepti, 462042 Bhopal (IN)
(74) Representative: Maiwald GmbH

(57) **Abstract**

The present invention relates to a method (100) for improving the performance of a data-driven model (80), comprising the following steps:
- Applying (102) a first data quality (DQ) issue (10) to a selected first input signal (12) for the data-driven model (80);
- Applying (104) an at least second data quality (DQ) issue (14) to an at least selected second input signal (16) for the data-driven model (80);
- Determining (106) an output parameter (20) of the data-driven model (80) based on the input signals (12, 16);
- Determining (108) a performance parameter (24) of the data-driven model (80) based on the determined output parameter (20);
- Generating (110) a data quality-related signal pattern (30) based on the determined performance parameter (24), wherein the data quality-related signal pattern (30) defines a minimum of DQ issues (10, 14) that causes the performance parameter (24) of the data-driven model (80) to deviate from a defined target performance parameter (28).

## Description

### FIELD OF THE INVENTION

The present invention relates to a method for improving the performance of a data-driven model.

### BACKGROUND OF THE INVENTION

The performance of data-driven models, e.g. Machine-Learning (ML)-models is highly dependent on data quality (DQ) in a system. Once DQ begins to deteriorate, model predictions can become rapidly unreliable. In the case of industrial automation systems, typically time series readings from plant sensors (e.g., pressure or flow sensors) are collected as data. These sensors may experience common technical issues, such as degrading sensor calibration, noise, or missing data due to wireless signal loss.

An essential step in the development of any data-drivenl model is the evaluation of the model's performance after training using a test dataset. Commonly employed performance metrics include calculating the model accuracy. As deteriorating DQ is a realistic scenario in the industrial domain, knowing how the model performs under this scenario can be just as informative as knowing how the model performs under normal conditions without any issues.

The effect of data quality on data-driven model performance has been identified in recent research. For example, the CN115795321 A discloses a method for improving the performance of a model based on data quality.

Further, it is known that different types of data-driven models, such as regressors, classifiers, and clustering models, react differently in terms of their sensitivity to various DQ issues. However, it might be misleading to make a generalization about the sensitivity of abstract model types. Instead, each model behaves differently, necessitating that each model instance be individually analyzed in order to determine its actual sensitivity to potential DQ issues in its specific use case.

In addition to examining how isolated DQ issues in single signals may affect the performance of the model (i.e., univariate DQ issues), it is necessary to examine how DQ issues in multiple signals (i.e., multivariate DQ issues) affect the model. For instance, examining single signals may have no effect because the model has learned redundancies from other signals. In this situation, a comprehensive analysis of which combination of DQ issues in multiple signals degrades the model's performance could reveal model limitations or aid in its improvement.

Consequently, a generic and reusable solution for analyzing robustness of a data-driven model against various types of DQ issues is required in order to improve performance of a daten-driven model.

There is a need to address these issues.

### SUMMARY OF THE INVENTION

Therefore, it would be advantageous to provide an improved concept for improving the performance of a data-driven model.

The object of the present invention is solved by the subject matter of the independent claims, wherein further embodiments are incorporated in the dependent claims.

In a first aspect of the present invention, there is provided a method for improving the performance of a data-driven model comprising the following steps:
- applying a first noise signal to a selected first input signal for the data-driven model;
- applying an at least second data quality (DQ) issue to an at least selected second input signal for the data-driven model;
- determining an output parameter of the data-driven model based on the input signals;
- determining a performance parameter of the data-driven model based on the determined output parameter;
- generating a data quality-related signal pattern based on the determined performance parameter, wherein the data quality-related signal pattern defines a minimum of DQ issues that causes the performance parameter of the data-driven model to deviate from a defined target performance parameter.

In other words, a core idea behind the present invention is to measure or to monitor an impact of data quality (DQ) issues, e.g. noise signal(s) in multiple input signals, on the performance of the data-driven model. In this way, when a robustness or a sensivity of the date-driven model towards these DQ issues is determined, the parameters of the data-driven model or to be more general, the performance of the data-driven model can be improved.

Further, the present invention provides an answer to the question how the trained model might be able to handle a large amount of noise in a single signal, but is extremely sensitive to even low levels of noise when it simultaneously appears in two or more distinct signals.

Monitoring data quality is proposed as a solution to this problem. During model development, the model's sensitivity to DQ issues is assessed. For the present invention a trained data-driven model may be used with test data with known ground truth predictions.

The user then first establishes an acceptable performance threshold for this data-driven model and use case, for example a specific mean squared error for regression or, in the case of multiclass classification and an imbalanced class distribution, a specific balanced accuracy.

The user also specifies which input signals of the data-driven model are to be analyzed, such as those most likely to be affected by DQ issues, wherein noise signals are one example for DQ issues, applied to the input signals.

Therefore, a basic concept of the present invention is to use DQ issues or perturbed data to artificially apply specific types and amounts of perturbed DQ issues to the signals and then provide the data-driven model with this perturbed data for prediction and evaluation.

The question to be answered by the present invention is then to what extent the perturbed data causes the data-driven model to alter its predictions, for example, to predict a different class. If the predicted class does not change, it can be concluded that the date-driven model is resistant to the induced DQ issues.

Nevertheless, if the predicted class changes, it can be concluded that the DQ issues that were introduced were the cause of the model's inaccurate predictions. For different types of DQ metrics, such as "completeness", there could be specific data perturbers implemented.

In this manner, the performance of the data-driven model can be efficiently improved, as impacts of DQ issues introduced to input signals of the date-driven model can be analysed that finally helps to adjust the performance parameters of the data-driven model in a way that is required for a certain application of the data-driven model. According to an example, the step of generating the data quality-related signal pattern involves a step of analysing a contribution of each of the DQ issues and / or a combination of the DQ issues to the determined output parameter of the data-driven model. Therein, the advantage is achieved that an efficient evaluation of the factors is possible that have an impact on the performance of the data-driven model.

According to an example, the step of analysing involves increasing each contribution of each DQ issue individually in order to determine a first acceptable maximum noise level value for each of the DQ issues until the determined performance parameter reaches the defined target performance parameter. The first maximum noise level value refers to noise level that is still acceptable. Therein, the advantage is achieved that an efficient evaluation of the perturbed signals or factors is possible that have an impact on the performance of the data-driven model.

According to an example, the step of analysing involves increasing each contribution of a selected combination of the DQ issues in order to determine a second maximum noise level value for each of the DQ issues until the determined performance parameter reaches the defined target performance parameter. In this way, the performance of the data-driven model can be efficiently monitored and adapted. Alternatively, the minimum noise level is searched that achieves (in combination) the target performance deterioration. For that, in each step, the next additional noise to add to any signal that maximizes the deterioration for this step.

According to an example, the method comprises a step of generating an alert information, when the data-quality (DQ)-related signal pattern is recognized during a runtime operating of the date-driven model. In this way, the measures to control the performance of the data-driven model can be efficiently and timely implemented.

According to an example, the alert information is generated, when a noise level at least one of the DQ issues exceeds the acceptable maximum noise level value in at least one of the input signals and / or in a combination of the input signals before the determined performance parameter exceeds the defined target performance parameter. In this way, the advantage is achieved that the measures to control the performance of the data-driven model can be efficiently and timely implemented.

According to an example, the method comprises a step of generating a display information displaying at least one the DQ issues which exceeds the maximum noise level value. In this way, efficient monitoring of the DQ issues is implemented helping to better understand a deterioration of the performance of the data-drivel model.

According to an example, the defined target performance parameter is a threshold indicating a minimum performance quality of the data-driven model. In this way, the advantage is achieved that performance quality of the data-driven model can be efficiently monitored in view of the defined target performance parameter.

In a second aspect of the present invention, a computer is provided comprising a processor configured to perform the method of the preceding aspect.

In a third aspect of the present invention, there is provided a computer program product comprising instructions which, when the program is executed by a processor of a computer, causes the computer to perform the method of any of the first and second aspects.

In a fourth aspect of the present invention, a machine-readable data medium and / or download product containing the computer program of the third aspect.

### BRIEF DESCRIPTION OF THE DRAWING

Exemplary embodiments will be described in the following with reference to the following drawings:

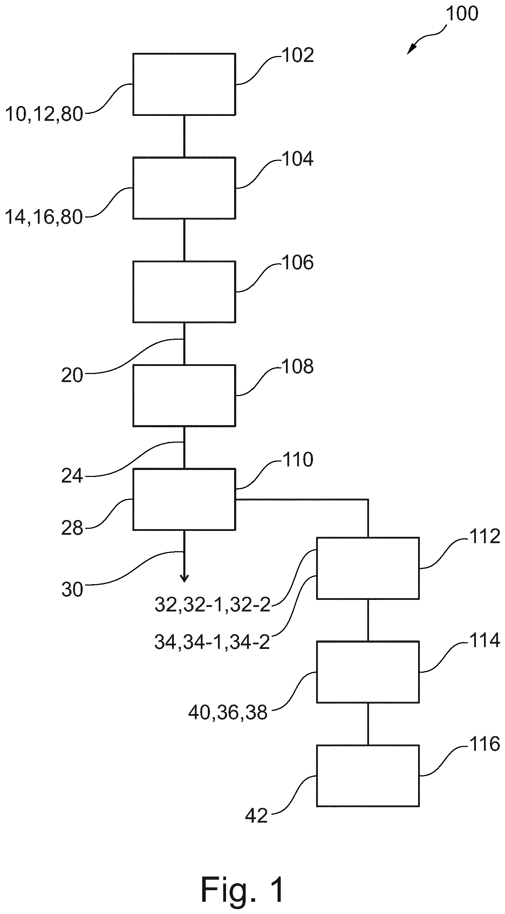

Fig. 1 illustrates a schematic flow-diagram of a method of the present invention.

### DETAILED DESCRIPTION OF THE DRAWING

Fig. 1 illustrates a schematic flow-diagram of a method 100 of the present invention for improving the performance of a data-driven model 80.

In a first step 102, a first data quality (DQ) issue 10 is applied to a selected first input signal 12 for the data-driven model 80.

In a second step 104, an at least second data quality (DQ) issue 14 is applied to an at least selected second input signal 16 for the data-driven model 80.

In a third step 106, an output parameter 20 of the data-driven model 80 is determined based on the input signals 12, 16.

In a fourth step 108, a performance parameter 24 of the data-driven model 80 based on the determined output parameter 20 is determined.

In a fifth step 110, a data quality-related signal pattern 30 is generated based on the determined performance parameter 24, wherein the data quality-related signal pattern 30 defines a minimum of DQ issues 10, 14 that causes the performance parameter 24 of the data-driven model 80 to deviate from a defined target performance parameter 28.

Optionally, the defined target performance parameter 28 is a threshold indicating a minimum performance quality of the data-driven model 80. The target performance parameter 28 can be adapted to the required application of the data-driven model 80.

The data quality-related signal pattern 30 can then be analysed or during runtime operation of the data-driven model this data quality-related signal mattern 30 can be searched or the existance of said signal pattern 30 can be detected. By knowing the existance of said signal pattern 30 during operation of the data-driven model 80, the performance of the data-driven model 80 can be improved by adjusting the relevant parameters of the data-driven model 80.

Optionally, the step of generating 110 the data quality-related signal pattern 30 involves a step 112 of analysing a contribution of each of the DQ issues 10, 14 and / or a combination of the DQ issues 10, 14 to the determined output parameter 20 of the data-driven model 80.

Optionally, the step of analysing 112 involves increasing each contribution of each DQ issue 10, 14 individually in order to determine a first maximum noise level value 32, 32-1, 32-2 for each of the DQ issues 10, 14 until the determined performance parameter 24 reaches the defined target performance parameter 28. The first maximum noise level refers to a noise level that is still acceptable for the performance output. That is, the first DQ issue 10 is assigned the first maximum noise level value 32-1. The second DQ issue 14 is assigned the first/second maximum noise level value 32-2.

Or to say it in other words, in a further aspect of the invention, minimum noise levels can also be searched and / or found by the present invention that achieve (in combination) the target performance deterioration. For that, in each step, the next additional noise is added to any signal that maximizes the deterioration for this step.

Optionally, the step of analysing 112 involves increasing each contribution of a selected combination of the DQ issues 10, 14 in order to determine a second acceptable maximum noise level value 34, 34-1-, 34-2 for each of the DQ issues 10, 14 until the determined performance parameter 24 reaches the defined target performance parameter 28. That is, the first DQ issue 10 is assigned the second/third maximum noise level value 34-1. The second DQ issue 14 is assigned the second/fourth maximum noise level value 32-2.

Optionally, the step 112 comprises a step of generating 114 an alert information 40, when the data quality-related signal pattern 30 is recognized during a runtime operating of the date-driven model 80.

Optionally, the alert information 40 is generated, when a noise level 36, 38 of at least one of the DQ issues 10, 14 exceeds the acceptable maximum noise level value 32 as defined by the DQ-related signal patterns, 34 in at least one of the input signals 12, 16 and / or in a combination of the input signals 12, 16 before the determined performance parameter 24 exceeds the defined target performance parameter 28. This means in detail that the current noisel level 36 of the first DQ issue 10 to be measured exceeds the maximum noise level 32. Correspondingly, it is meant that the current noisel level 38 of the second DQ issue 14 to be measured exceeds the maximum noise level 34.

Optionally, the step 112 comprises a step of generating 116 a display information 42 displaying at least one the DQ issues 10, 14 which exceeds the acceptable maximum noise level value 32, 34. This means, when the maximum noise level value 32 of the first DQ issue 10 and / or the when the maximum noise level value 34 of the first DQ issue 14 is exceed, a corresponding display (signal) information 42 is generated that can be processed to be forwarded to technical means and / or to be displayed on technical display means or monitoring means.

In the following, further aspects and detailed examples or embodiments of the present invention are explained in detail.

As mentioned before, the present inventions enables a multivariate DQ sensitivity analysis for the data-driven model 80. This can be applied in form of an optimization approach. In other words, according to the present invention, a minimum number of overall DQ issues across all signals is determined that will cause the data-driven model 80, for example, to fall below the predetermined performance threshold.

This can be accomplished using any known mathematical optimization technique (e.g., sequential greedy algorithm or random-restart hill climbing) in which DQ issues in the selected signals are incrementally increased and the model's performance measured accordingly. Based on the chosen search strategy and loss function, an optimal solution can be obtained, which describes the minimum DQ issues needed to significantly deteriorate the model's performance to an unacceptable level.

This optimal solution provided in form of the data quality-related signal pattern 30, consists of a collection of signals and their respective DQ issues. For instance, the user sets the performance thresholds at 60% accuracy, and the optimal solution to fall below these thresholds consists of two signals, the first of which requires a DQ issue of 10% while the second requires a DQ issue of 40%. In the case of perturbers containing random components, such as additive white Gaussian noise, a repeated multivariate sensitivity analysis may be required, with the final results being merged in the end.

This information can be used immediately to improve the data-driven model 80 and make it more robust, such as by adjusting the hyperparameters accordingly, using a different set of input signals, or adding redundant signals to the set of input signals already used. In addition, the analysis results serve as "thresholds" for acceptable signal-specific data quality. When data-driven models are deployed today, they are typically accompanied by additional files, such as the data scaler used to scale the training data. During model training, various DQ thresholds discovered through DQ sensitivity analysis can be saved and deployed.

Then, during model deployment, new data samples can be re-measured for their DQ using DQ metrics, as already known in the state-of-the-art. When the measured DQ changes, the user is only notified if the DQ exceeds the acceptable thresholds. The implementation of such DQ alerts can follow the implementation of alarms in modern industrial control systems, in which a combined alarm is triggered when the respective thresholds of multiple signals are exceeded.

In a possible scenario in which a given data-driven model is, for instance, relatively resistant to data noise or seleteced DQ issue(s), the measured level of noise may have increased from 5% to 15% in two signals. However, as the acceptable threshold of noise is 10% for the first signal and 20% for the second signal, our solution will not issue a warning to the user in this instance, as there is no need to do so if the model continues to perform acceptably.

In the event that an alert information was raised, it would also be possible to "explain" it to the user by displaying which signals exceeded their threshold and what DQ issues caused the alert information to be generated.

Therefore, the present invention provides a solution to inform a user of which input signals triggered the alert.

For this, two use case-specific approaches regarding how existing industry visualizations can incorporate DQ analysis results and DQ issue alerts are introduced.
1. DQ alerts and alarms can be displayed directly as an overlay on the process control system's control screens for the human operator in an industrial process plant who monitors the assigned process section or the entire plant from a (centralized) control room. Typically, these screens implement a process flowchart of the underlying industrial process and display relevant process variable values and time trends, such as the level of a tank or the temperature of a reactor. In addition, these screens permit the operator to drill down or roll up and display information at various levels of abstraction and granularity. Here, at lower levels of granularity, DQ alerts can be displayed directly in the process schematic as additional information to the process variables and sensor signals they belong to, e.g., using a color-coded indicator that indicates whether a DQ alert has been raised for this signal or a subset of signals. When drilling down, a dedicated page on the operator screens can provide additional information on the type of DQ issue, its duration, its impact, and its potential causes, among other things.
2. Similar visualization can also be used in discrete manufacturing, where the responsible engineer, service personnel, etc. can be made aware of DQ issues and alerts using existing human-machine interfaces (HMI) between production robots and human operators. Such HMIs include portable information devices such as tablets with specialized software and visualizations, on-site computer screens or centralized control rooms that provide an overview of all production robots. Here, DQ analysis results and alerts can be incorporated that indicate for individual robots or multiple robots which sensor signals exhibit these DQ issues and whether different robots are impacted by the same or similar DQ issues.

Further, the present invention allows to set both individual DQ thresholds for each signal (univariate) as well as combined DQ thresholds with multiple signals (multivariate).

An example implementation of the proposed optimization approach using a sequential greedy algorithm can be as follows. At a first step, a certain increment of DQ issues is added to each input signal individual. Then, the model performance of the data-driven model for each of these perturbed signals or datasets is measured, and the respective loss function value is calculated. The signal perturbation that has the greatest impact on the data-driven models' performance is then chosen for this increment. If the target model performance, i.e., the set performance acceptance threshold, is reached, the optimal solution is provided in the form of a DQ-related pattern i.e., the set of relevant signals and their respective DQ issue magnitude).

In summary, the method of the present invention that can be applied to a corresponding system for conducting multivariate data quality sensitivity analysis provides the following features and advantages:
A machine learning or statistical model, a machine learning task (e.g., classification or regression), and evaluation data is given as an input.

The presen invention permits the user to specify the input signals to be examined.

The present invention enables the user to specify the data quality metrics (e.g., noise) for analysis.

The present invention permits the user to specify a model performance metric (e.g., accuracy or mean squared error) and model performance threshold at which the analyzed model starts to show an unacceptable model performance.
The present invention allows to introduce data quality issues to generate perturbed data from the original evaluation data. Further, the present invention allows to introduce data quality issues to multiple signals and with individual magnitude.

The present invention allows to find the minimum set of combined data quality issues in multiple signals and with different magnitude (hence multivariate) at which the model's performance falls below the defined threshold using a mathematical optimization approach and different sets of perturbed data.

The present invention allows to repeat the analysis, e.g., with different settings or random seeds, and merge the final results in the end.

The present invention allows to extract data quality thresholds for individual signals and signal combinations from the analysis results.

The present invention allows to retrain the model based on the analysis results, e.g., optimize the set of used model hyperparameters or the set of selected features in order to reach a predefined target robustness of the analyzed model.

Further, the present invention, e.g. a system for data quality monitoring for industrial process data allows the user to configure data quality metrics and combined alarms using distinct DQ thresholds for multiple signals for a specific machine learning or statistical model and use case.

The present invention further provides a dashboard for monitoring the data quality for the given data sets and signals in relation to the combined alarms that have been implemented (e.g., showing how many and which individual thresholds of a particular combined alarm are already exceeded and how likely it is that the alarm will be triggered in a certain amount of time). The present invention further allows to track the data quality of each signal individually.

The present invention allows to generate alert information and alarms (e.g., as an automatic email sent to the user) when all (i.e., alarm) or a predefined number (i.e., alert) of the given data quality thresholds of a combined alarm are exceeded.

The present invention allows to implement and use visualization tools that enable the incorporation of DQ analysis results and DQ issue alerts and alarms into existing operator screens or HMIs:
- DQ alerts and alarms can be displayed directly as an overlay on the process control system's control screens for the human operator in an industrial process plant. Here, at lower levels of granularity, DQ alerts can be displayed directly in the process schematic as additional information to the process variables and sensor signals they belong to, e.g., using a color-coded indicator that indicates whether a DQ alert has been raised for this signal or a subset of signals. When drilling down, a dedicated page on the operator screens can provide additional information on the type of DQ issue, its duration, its impact, and its potential causes, among other things.
- In discrete manufacturing, HMIs between production robots and human operators can alert the responsible engineer, service personnel, etc. of DQ issues and alerts. DQ analysis results and alerts can be used to identify which sensor signals have DQ issues and whether different robots are affected by the same or similar DQ issues.
- The HMI can be used by data scientists and machine learning engineers alike to drill down and determine in which segment of the plant the DQ issue occurred/originated in order to gain a better understanding of what causes the decrease in model performance.

### Reference signs:

- 10: First data quality (DQ) issue
- 12: First input signal
- 14: Second data quality (DQ) issue
- 16: Second input signal
- 20: Output parameter
- 24: Performance parameter
- 28: Target performance parameter
- 30: Data quality-related signal pattern
- 32, 32-1, 32-2: First maximum noise level value
- 34, 34-1, 34-2: Second maximum noise level value
- 36: Noise level value of the first DQ issue
- 38: Noise level value of the second DQ issue
- 40: Alert information
- 42: display information
- 80: Data-driven model
- 100: Method
- 102: Applying
- 104: Applying
- 106: Determining
- 108: Determining
- 110: Generating
- 112: Analysing
- 114: Generating
- 116: Generating

## Claims

1. Method (100) for improving the performance of a data-driven model (80), comprising the following steps:
- Applying (102) a first data quality (DQ) issue (10) to a selected first input signal (12) for the data-driven model (80);
- Applying (104) an at least second data quality (DQ) issue (14) to an at least selected second input signal (16) for the data-driven model (80);
- Determining (106) an output parameter (20) of the data-driven model (80) based on the input signals (12, 16);
- Determining (108) a performance parameter (24) of the data-driven model (80) based on the determined output parameter (20);
- Generating (110) a data quality-related signal pattern (30) based on the determined performance parameter (24), wherein the data quality-related signal pattern (30) defines a minimum of DQ issues (10, 14) that causes the performance parameter (24) of the data-driven model (80) to deviate from a defined target performance parameter (28).

2. Method (100) according to claim 1, wherein the step of generating (110) the data quality-related signal pattern (30) involves a step (112) of analysing a contribution of each of the DQ issues (10, 14) and / or a combination of the DQ issues (10, 14) to the determined output parameter (20) of the data-driven model (80).

3. Method (100) according to claim 2, wherein the step of analysing (112) involves increasing each contribution of each DQ issue (10, 14) individually in order to determine a first maximum noise level value (32, 32-1, 32-2) for each of the DQ issues (10, 14) until the determined performance parameter (24) reaches the defined target performance parameter (28).

4. Method (100) according to claim 2, wherein the step of analysing (112) involves increasing each contribution of a selected combination of the DQ issues (10, 14) in order to determine a second maximum noise level value (34, 34-1-, 34-2) for each of the DQ issues (10, 14) until the determined performance parameter (24) reaches the defined target performance parameter (28).

5. Method (100) according to any of the preceding claims 3 or 4 comprising a step of generating (114) an alert information (40), when the data quality-related signal pattern (30) is recognized during a runtime operating of the date-driven model (80).

6. Method (100) according to claim 5, wherein the alert information (40) is generated, when a noise level (36, 38) of at least one of the DQ issues (10, 14) exceeds the acceptable maximum noise level value (32, 34) in at least one of the input signals (12, 16) and / or in a combination of the input signals (12, 16) before the determined performance parameter (24) exceeds the defined target performance parameter (28).

7. Method (100) according any of the preceding claims 5 or 6, comprising a step of generating (116) a display information (42) displaying at least one the DQ issues (10, 14) which exceeds the acceptable maximum noise level value (32, 34).

8. Method (100) according to any of the preceding claims, wherein the defined target performance parameter (28) is a threshold indicating a minimum performance quality of the data-driven model (80).

9. A computer comprising a processor configured to perform the method of any preceding claims 1 to 8.

10. A computer program product comprising instructions which, when the computer program is executed by a processor of a computer, causes the computer to perform the method of any of claims 1 to 9.

11. Machine-readable data medium and / or download product containing the computer program according to claim 10.
